# EUROPEAN PATENT SPECIFICATION

(11) **EP 2 760 284 B1**
(45) Date of publication and mention of the grant of the patent: **05.08.2020**
(21) Application number: 12835970.0
(22) Date of filing: 21.09.2012
(51) Int. Cl.: A01P 1/00, A01N 59/00

(54) **METHODS FOR THE ON-SITE PRODUCTION OF CHLORAMINE AND ITS USE THEREOF**
VERFAHREN ZUR VOR-ORT-HERSTELLUNG VON CHLORAMIN UND DESSEN VERWENDUNG
PROCÉDÉS POUR LA PRODUCTION SUR SITE DE CHLORAMINE ET SON UTILISATION

(30) Priority: 30.09.2011 US 201113249972
(43) Date of publication of application: 06.08.2014
(73) Proprietor: Nalco Company, Naperville, IL 60563-1198 (US)
(72) Inventor: GUPTA, Amit, Aurora, Illinois 60503 (US); RICE, Laura, E., Saint Charles, Illinois 6074 (US); ELLIOT, Randall, Naperville, Illinois 60565 (US); LU, Mei, Zhang Xiao East Road, Section 5, Taipei, 11082 (TW); TU, Wen Li, Pudong District, Shanghai 201210 (CN)
(74) Representative: Godemeyer Blum Lenze Patentanwälte Partnerschaft mbB - werkpatent
(86) International application number: PCT/US2012/056567
(87) International publication number: WO 2013/048899

(56) References cited:
- WO-A1-2009/155462
- US-A- 3 254 952
- US-A- 4 038 372
- US-A1- 2002 125 196
- US-A1- 2003 232 447
- US-A1- 2004 086 577
- US-A1- 2004 141 905
- US-A1- 2007 049 642
- US-A1- 2007 183 957
- US-A1- 2008 093 308
- US-A1- 2008 156 740
- US-A1- 2008 156 740
- US-A1- 2008 160 104
- US-A1- 2008 160 604
- US-A1- 2008 160 604
- US-A1- 2009 117 202
- US-A1- 2009 173 697
- US-A1- 2009 311 164
- US-A1- 2010 078 393
- US-A1- 2011 159 117
- US-B1- 6 222 071
- US-B2- 6 964 788

## Description

### Background of the Invention

This invention relates to methods for producing stable chloramine for use as a biocidal composition. Industrial water systems are subject to various sorts of fouling. Fouling can occur in the form of mineral fouling, biological fouling, and often combinations of the two. In fact mineral fouling often provides an anchor and substrate for biological infestations, and some organisms leach or secrete minerals onto industrial water system surfaces.

Fouling may occurs as a result of a variety of mechanisms including deposition of air-borne and water-borne and water-formed contaminants, water stagnation, process leaks, and other factors. If allowed to progress, fouling can cause a system to suffer from decreased operational efficiency, premature equipment failure, loss in productivity, loss in product quality, and (in particular in the case of microbial fouling) increased health-related risks.

Biological fouling results from rapidly spreading microbial communities that develop on any wetted or semi-wetted surface of the water system. Once these microorganisms are present in the bulk water they will form of biofilms on the system's solid surfaces.

Exopolymeric substance secreted from the microorganisms aid in the formation of biofilms as the microbial communities develop. These biofilms are complex ecosystems that establish a means for concentrating nutrients and offer protection for growth. Biofilms can accelerate scale, corrosion, and other fouling processes. Not only do biofilms contribute to reduction of system efficiencies, but they also provide an excellent environment for microbial proliferation that can include pathogenic bacteria. It is therefore important that biofilms and other fouling processes be reduced to the greatest extent possible to maximize process efficiency and minimize the health-related risks from water-borne pathogens.

Several factors contribute to the problem of biological fouling and govern its extent. Water temperature; water pH; organic and inorganic nutrients, growth conditions such as aerobic or anaerobic conditions, and in some cases the presence or absence of sunlight, etc. can play an important role. These factors also help in deciding what types of microorganisms might be present in the water system.

Many different Prior Art approaches have been attempted to control biological fouling of industrial processes. The most commonly used method is the application of biocidal compounds to the process waters. The biocides applied may be oxidizing or non-oxidizing in nature. Due to several different factors such as economics and environmental concerns, the oxidizing biocides are preferred. Oxidizing biocides such as chlorine gas, hypochlorous acid, bromine derived biocides, and other oxidizing biocides are widely used in the treatment of industrial water systems.

One factor in establishing the efficacy of oxidizing biocides is the presence of components within the water matrix that would constitute a chlorine demand or oxidizing biocide demand. Chlorine-consuming substances include, but are not limited to, microorganisms, organic molecules, ammonia and amino derivatives; sulfides, cyanides, oxidizable cations, pulp lignins, starch, sugars, oil, water treatment additives like scale and corrosion inhibitors, etc. Microbial growth in the water and in biofilms contributes to the chlorine demand of the water and to the chlorine demand of the system to be treated. Conventional oxidizing biocides were found to be ineffective in waters containing a high chlorine demand, including heavy slimes. Non-oxidizing biocides are usually recommended for such waters.

As described in US Patent Applications 12/546,086 and 11/618,227, Chloramines are effective and are typically used in conditions where a high demand for oxidizing biocides such as chlorine exists or under conditions that benefit from the persistence of an oxidizing biocide. Domestic water systems are increasingly being treated with chloramines. Chloramines are generally formed when free chlorine reacts with ammonia present or added to the waters. Many different methods for production of chloramines have been documented. Certain key parameters of the reaction between the chlorine and the nitrogen source determine the stability and efficacy of the produced biocidal compound.

Prior Art methods of producing chloramines have been described for example in US Patents 7,285,224, 6,132,628, 5,976,386, 7,067,063, and 3,254,952 and US Published Patent Application and 2007/0123423. The Prior Art methods generally rely on the combination of an ammonium stabilizer component and a sodium hypochlorite component in a dilute or concentrated form to produce a solution of chloramines followed by immediate introduction into the water system being treated. Also typically the combination of the chemical components is conducted in a continuous and synchronous fashion in a conduit. To achieve this the components are either added to separate diluent (such as water) streams followed by the combination of the different streams containing the diluted components or the components are added simultaneously to the same stream at different locations, or the concentrated from of the components are combined. The components comprise a nitrogen source typically in the form of a ammonium salt (such as a sulfate, bromide, or chloride) and a chlorine or Bromine donor in the form of gas or combined with alkali earth metal (such as sodium, potassium, or calcium). Also the prior art methods have relied upon controlling the pH of the mixed solution by addition of a component at a high pH or by the separate addition of a caustic solution.

US 3 254 952 discloses that chloramine is produced by adding sodium hypochlorite to ammonia in the presence of an acceptor, which is an acid or a water-soluble acid salt or a water-soluble neutral salt containing calcium, magnesium or zinc cations. The acceptor is in a concentration sufficient to react with at least 25% of the sodium hydroxide produced in this reaction. Ammonium chloride and hydrochloric acid are preferred acceptors, and a sequestering agent such as glue or gelatin may be added. The reaction is carried out between - 10 ° and + 20 °C. The chloramine solution may be reacted with ammonia and an alkali metal hydroxide at a temperature between 20 ° and 140 °C to form hydrazine. Primary and secondary amines are reacted with chloramine solution and an alkali metal hydroxide to form substituted hydrazines, at a temperature between 20 ° and 50 °C. The amine can contain alkyl, cycloalkyl or heterocyclic radicals, those with alkyl groups having from 1 to 6 carbon atoms being particularly suitable. Examples given are methylamine, dimethylamine and piperidine. The chloramine solution is prepared by adding sodium hypochlorite to ammonia in the presence of an acceptor, which is an acid, a water-soluble acid salt, or a water-soluble neutral salt containing calcium, magnesium or zinc cations.

US 2004/086577 A1 relates to a process for the synthesis of monochloramine by reaction of an ammonium chloride solution with a sodium hypochlorite solution. The sodium hypochlorite solution is basified beforehand with an inorganic base and the ratio of the concentration of ammonium chloride in the reaction medium to the concentration of sodium hypochlorite in the reaction medium is between 1 and 1.5. This ratio is preferably equal to 1.1.

US 6 222 071 B1 relates to a process for the preparation of high-grade chloramine by the action of commercial eau de Javelle of 100 chlorometric degrees on a solution of ammonia in the presence of ammonium chloride. According to this process, the chloramine is obtained having a content greater than or equal to 2 mol L⁻¹, that is to say, greater than or equal to 10.3%. The process can be carried out continuously or discontinuously.

US 4 038 372 relates to a process and apparatus for producing an inorganic compound and more specifically to a process and apparatus for producing chloramine.

US 2007/183957 A1 relates to a process for the production of chloramine comprising supplying a first reagent stream comprising chlorine gas and a second reagent stream comprising ammonia gas to a reaction zone maintained at a temperature of less than 275 °C and configured to allow expansion of the first and second reagent streams in the reaction zone to an extent sufficient to generate chloramine as a gas and ammonium chloride as a free falling solid. US 2007/183957 A1 also provides a chemical reactor suitable fur operating this process.

US 2004/141905 A1 provides a reactor for the gas-phase reaction of commercially available gases in the presence of an inert carrier gas to form product gas. The reactor has a streamlined, compact configuration and at least one solids collection and removal system downstream of the reactor, where solids are efficiently removed from the product gas stream, leaving high purity product gas. The removal system allows for a simple reactor design, which is easy to clean and operates continuously over longer periods of time.

US 2008/160604 A1 relates to an apparatus for the production of oxidizing biocides. The apparatus can be used as a remote production system where the product is stored use or it can be an in situ production system where the product can be in fluid connection with the system being treated. The preferred product of the system is chloramine, which can be produced in a stable form with this apparatus.

US 2008/156740 A1 relates to a production method for producing stable chloramine. The method allows for the production of stable chloramine with the use of concentrated Chlorine source and concentrated amine source and agitation during production. The method produces a chloramine that has a pH of at least 5 with a most preferred pH of at least 7 or greater.

US 2009/311164 A1 relates to a production method for producing stable chloramine. The method allows for the production of stable chloramine with the use of concentrated chlorine source and concentrated amine source and agitation during production. The method produces a chloramine that has a pH of at least 5 with a most preferred pH of at least 7 or greater.

US 2002/125196 A1 discloses that raw water is treated with chlorine, chlorine dioxide and ammonia in various stages as it proceeds from raw water acquisition through clarification (e.g., coagulation, flocculation, sedimentation, and filtration) to storage of finished water from which the treated water can be introduced into a distribution system. Chlorine dioxide can be used as a pre-oxidant or disinfectant. Chlorine can be used as a disinfectant or to react with ammonia to produce monochloramine.

US 2009/173697 A1 discloses that monochloramine is efficiently manufactured by introducing controlled quantities of an ammonia source and a chlorine source in a small sidestream of water in a small diameter pipe under turbulent flow conditions. The ammonia source and chlorine source can be injected in either order and are separated by a sufficient distance to ensure that the first chemical is adequately diffused throughout the water prior to the injection of the second chemical. A sufficient length of a mixing chamber insures that turbulent flow is maintained for a length of time sufficient to thoroughly mix the two chemicals to produce monochloramine. This mixing technique allows for the manufacture of high concentrations of monochloramine at atmospheric pressure without off gassing.

US 2008/093308 A1 discloses that a water disinfection system using simultaneous multiple disinfectants includes a completely stirred tank reactor (CSTR) and a contact basin or clearwell acting as a plug flow reactor (PFR). The CSTR receives ammoniated water and free chlorine, and generates multiple disinfectants in primary disinfection water within the CSTR. The contact basin or clearwell receives primary disinfected water from the CSTR, the primary disinfected water containing the disinfectants. A method for water disinfection including mixing the non-disinfected treated water with ammonia to form ammoniated water, mixing the ammoniated water with free chlorine to form a primary disinfection water including multiple disinfectants, and maintaining the disinfectants in the primary disinfection water.

US 2007/049642 A1 discloses an apparatus and methods to produce synergistic mixtures (or combinations) of haloamines to control growth of microorganisms in aqueous systems. The apparatus and methods to produce synergistic mixtures entails producing a batch quantity of a haloamine and converting part of the haloamine to a second haloamine species to form the synergistic mixture.

US 2011/159117 A1 discloses synergistic mixtures of haloamines and their use to control the growth of microorganisms in aqueous systems. The method of using the synergistic mixtures entails adding an effective amount of a monohaloamine and an effective amount of a dihaloamine to an aqueous system. The ratio of monohaloamine to dihaloamine is selected to result in a synergistic biocidal effect.

US 2008/160104 A1 discloses an antimicrobial composition prepared by mixing a polymer-ammonium salt formulation comprising one or more polymers and one or more ammonium salts with alkali and a chlorine source in a molar ratio of chlorine (as C12) to ammonium ion of about 1:10 to about 10:1 and methods of using the composition to control biofouling of aqueous systems.

US 2003/232447 A1 discloses that a water chloramination control system compares the concentration of aqueous higher chloramines to aqueous ammonia to optimize the ratio of added ammonia to chlorine. Aqueous ammonia concentration is measured by conversion to monochloramine which concentration is determined spectroscopically. Higher chloramine concentration is measured by a reaction producing free iodine which concentration is also determined spectroscopically. The higher chloramine to ammonia ratio is used to control ammonia feed to the water. Problems associated with excess chlorine, or excess ammonia, are avoided.

WO2009/155462 A1 provides methods and kits for determining the concentration of free chlorine in water. To avoid false readings from other species present in the water, the free chlorine reacts with ammonia to form monochloramine, which is then reacted to form an indophenol or an indonaphthol. The concentration of the indophenol or indonaphthol is proportional to the total monochloramine present. Subtracting the concentration of residual monochloramine from the total monochloramine yields the concentration of monochloramine formed from the free chlorine and ammonia, and is proportional to the concentration of free chlorine. Embodiments find use throughout industry, unexpectedly simplifying and accelerating the measurement of free chlorine in water, without interference from compounds impacting current free chlorine methods of analysis.

The limitations of these Prior Art methods have imposed a number of drawbacks on their use. Most limiting is the fact that the produced chloramine must be immediately used and cannot be stored for future use because it is subject to rapid degradation. The chloramine also must be generated outside of the system being treated and must be rapidly piped in to the system. As a result various economic, efficiency, and process, constraints limit the use and practicality of these Prior Art methods. Thus there is clear need and utility for a methods and compositions useful in improving the production and use of stable chloramine for use as a biocidal composition.

### Brief Summary of the Invention

The invention is directed to a method of producing stable disinfectant for use as a biocidal composition, the method comprising: providing reagents, the reagents comprising: a) an amine source of disinfectant in concentrated form, b) an oxidizing halogen compound in concentrated form, and c) a diluent, asynchronously feeding the amine source of disinfectant in concentrated form and oxidizing halogen compound in concentrated form into an area in a mixing line where the diameter of the line is larger than the largest individual reagent supply line leading into it and in which the transition from the smaller to larger diameter is not streamlined, whereby when a liquid flows into this area the change in diameter results in eddies which mix the fed materials in an erratic manner and prevents channeling, and allowing all three of the reagents to come into contact and mix with each other, wherein the disinfectant is produced according to a continuous dose process.

The amine source may be chloramine. The diluent may comprise enough caustic to reduce the pH of the combination of reagents to no more than 12.5. The concentration of the disinfectant in concentrated form may be in the range from 5% - 80% and after it is mixed with the diluent it drops to 0.01% - 5%. The concentration of the oxidizing halogen compound in concentrated form may be within the range of 3% - 18% and after it is mixed with the diluent it drops to 0.01% - 3%. The molar ratio of chloramine to oxidizing halogen may be within the range of 0.1:1 to 10:1. The oxidizing halogen may be a chlorine source and may be sodium hypochlorite. The disinfectant is produced according to a continuous dose process.

Additional features and advantages are described herein, and will be apparent from the following Detailed Description.

### Brief Description of the Drawings

A detailed description of the invention is hereafter described with specific reference being made to the drawings in which:
FIG. 1 is a drawing of a separate addition method of producing chloramine using a wide space in the blending lines or a batch method.
FIG. 2 is a drawing of a continuous dilution method of producing chloramine using a wide space in the blending lines or a batch method.
FIG. 3 is a drawing of a prior mixing method of producing dilute chloramine using a wide space in the blending lines or a batch method.
FIG. 4 is a drawing of a prior mixing and subsequent dilution method of producing chloramine using a wide space in the blending lines or a batch method.
FIG. 5 is a drawing of a sequential addition method of producing dilute chloramine.
FIG. 6 is a drawing of a sequential feed method of introducing chloramine into a system to be treated.
FIG. 7 is a drawing of a periodic addition method of introducing chloramine into a system to be treated.
FIG. 8 is a drawing of a first form of alternating addition method of introducing chloramine into a system to be treated.
FIG. 9 is a drawing of a second form of alternating addition method of introducing chloramine into a system to be treated.
FIG. 10 is a drawing of a third form of alternating addition method of introducing chloramine into a system to be treated.
FIG. 11 is a drawing of a fourth form of alternating addition method of introducing chloramine into a system to be treated.
FIG. 12 is a drawing of a first form of alternating feeding addition method of introducing chloramine into a system to be treated.
FIG. 13 is a drawing of a second form of alternating feeding addition method of introducing chloramine into a system to be treated.
FIG. 14 is a drawing of a third form of alternating feeding addition method of introducing chloramine into a system to be treated.
FIG. 15 is a drawing of a third form of alternating feeding addition method of introducing chloramine into a system to be treated where the amine and halogen components are added at the same location in the conduit.
FIG. 16 is a drawing of a third form of alternating feeding addition method of introducing chloramine into a system to be treated where the amine and halogen components are added at the same location in the conduit.
FIG. 17 is a drawing of a third form of alternating feeding addition method of introducing chloramine into a system to be treated where the amine and halogen components are added at the same location in the conduit.
FIG. 18 is a drawing of a third form of alternating feeding addition method of introducing chloramine into a system to be treated where the amine and halogen components are added at the same location in the conduit.
FIG. 19 is a drawing of a third form of alternating feeding addition method of introducing chloramine into a system to be treated where the amine and halogen components are added at the same location in the conduit.

### Detailed Description of the Invention

The following definitions are provided to determine how terms used in this application, and in particular how the claims, are to be construed. The organization of the definitions is for convenience only and is not intended to limit any of the definitions to any particular category.

"Amine Source" means any inorganic or organic compound comprising an ammonium ion and/or moiety which can be oxidized and/or halogenated by an oxidizing halogen.

"Asynchronous Mixing" means mixing such that over a discrete period of time the amount or concentration of a material mixed and then fed into a system fluctuates. Asynchronous Mixing of biocides is more likely to result in the particular formulation ideal for killing the particular organism present happening to result and it also creates a dynamic environment which makes it difficult for organisms to adapt to.

"Batch Process" means a chemical process in which only a finite number of reagents can be fed into a reaction operation over a period of time having a discrete start time and end time and which produces a finite amount of product.

"Channeling" means a process in which mixture of materials flowing through a line separates into different flowing layers sorted by density, viscosity, temperature or some other property. Channeling can be prevented by use of a wide space in the mixing line.

"Chlorine demand" means the quantity of chlorine that is reduced or otherwise transformed to inert forms of chlorine by substances in the water.

"Concentrated" means the materials are used as delivered, without the addition of a diluent. Where sodium hypochlorite is used, the concentration will range from 3-18% as total available chlorine. The concentration of the amine solutions may range from 5-80%.

"Continuous Process" means an ongoing chemical process, which is capable of theoretically continuing over an unlimited period of time in which reagents can be continuously fed into a reaction operation to continuously produce product. Continuous Process and Batch Process are mutually exclusive.

"Fouling" means the unwanted deposition of organic or inorganic material on a surface.

"Oxidizing Halogen" means a halogen bearing composition of matter including but not limited to chlorine, bromine or iodine derivatives, most preferably a chlorine or bromine derivative such as hypochlorous acid or hypobromous acid, wherein the composition is capable of oxidizing an amine source.

"Wide Space" means an area in the mixing line where the diameter of the line is larger than the largest individual reagent supply line leading into it and in which the transition from the smaller to larger diameter is not streamlined, whereby when a liquid flows into this area the change in diameter results in eddies which mix the fed materials in an erratic manner and prevents channeling. This wide space allows for adequate mixing, functioning differently than a standard conduit. The wide space could be an isolated batch tank.

According to the invention chloramine is generated by a process in which the chemical reagents are introduced into a wide space for the production of chloramine. In at least one embodiment one or more of the reagents are introduced either automatically via a controller device, such as a PLC device or a timer, or manually. Any number of measurements can be used to regulate the flow of reagents, including but not limited to tank volume, ORP, residual chlorine, pH, temperature, and microbial activity. The wide space can take the shape of a plumbed wide zone in a conduit that is then connected to the process being treated or it can be a separate container, for example a tank. A diluent which is any appropriate liquid including but not limited to water is also streamed into the wide space.

In FIG.s 1-19 there are shown a number of arrangements for an apparatus described herein. These apparatuses involve the feeding of at least three items into the wide space (4). Feed item A (1) is a concentrated or a diluted chlorine source, typically sodium hypochlorite. Feed item B (2) is a concentrated or a diluted stabilizer composition which is a nitrogen bearing composition. The nitrogen bearing portion can be an organic material or an ammonium salt. The salt form can be a result of the nitrogen bearing item being in the form of a sulfate, bromide or chloride. The nitrogen bearing material can also include ammonium sulfamate. At some point Feed Item A (1), Feed Item B (2), come into contact with a diluent (3). In at least one embodiment the diluent comprises water. In at least one embodiment the diluent comprises enough caustic to maintain the pH of the combination of Feed Items A and B (1, 2) to no more than 12.5. Other means of caustic addition include adding caustic to the halogen and/or stabilizer solution to maintain the pH of the combination of Feed Items A and B (1, 2) to no more than 12.5.

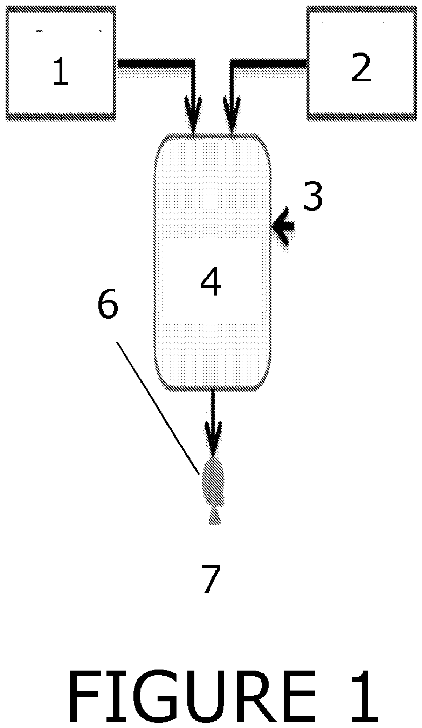

Referring now to FIG. 1 (not according to the invention) there is shown a method in which Feed Items A and B (1, 2) are added as concentrates or as diluted products. Additional diluent (3) may or may not be added or the products may be batch diluted on-site. The setup may contain an optional mixer to aid mixing of the different components. The chloramine as produced in the tank is then introduced into the process water system (7) needing to be treated. The introduction may be by way of a pump (6). The chloramine is produced in the wide space (4) and is then introduced into the process water system needing to be treated.

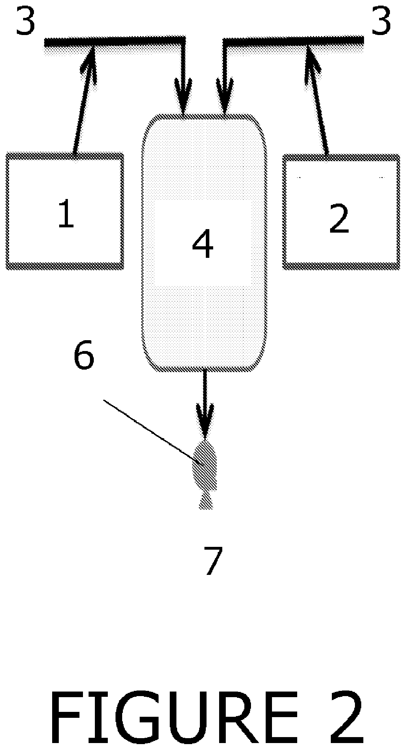

Referring now to FIG. 2 (not according to the invention) there is shown a method in which Feed Items A and B (1, 2) are diluted continuously as they are introduced into the wide space (4). Feed Items A and B (1, 2) and diluent (3) may be blended in any order. In at least one embodiment not all components are diluted. The setup may contain an optional in-line or static mixer to aid mixing of one or more chemical components and the diluent. Also, the setup may include a mixer in the tank to aid in the blending of the different solutions. The chloramine as produced in the tank is then introduced into the process water system requiring treatment.

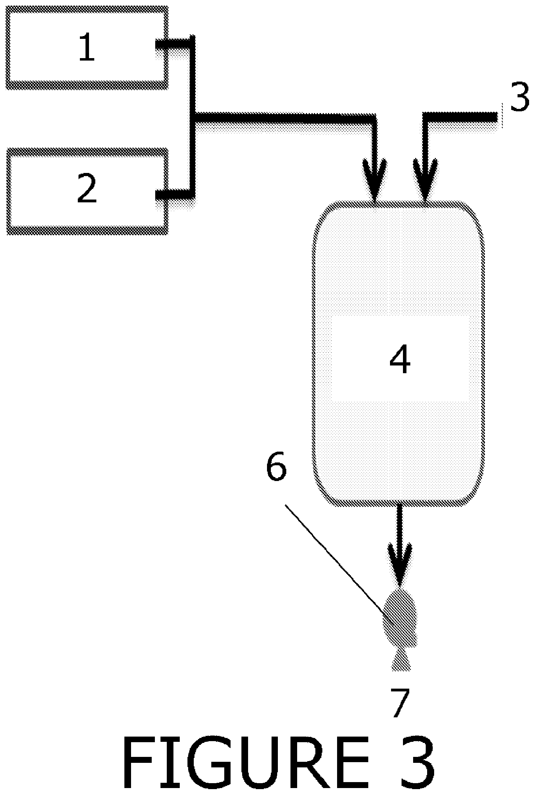

Referring now to FIG. 3 (not according to the invention) there is shown a method in which Feed Items A and B (1, 2) are either concentrates or diluted and are mixed with each other prior to being introduced into the tank. The setup may contain an optional in-line mixer to aid mixing of the chloramine and the diluent. Also, the setup may include a mixer in the tank to aid in the blending of the different solutions. The diluent can optionally be introduced into the tank in a separate stream.

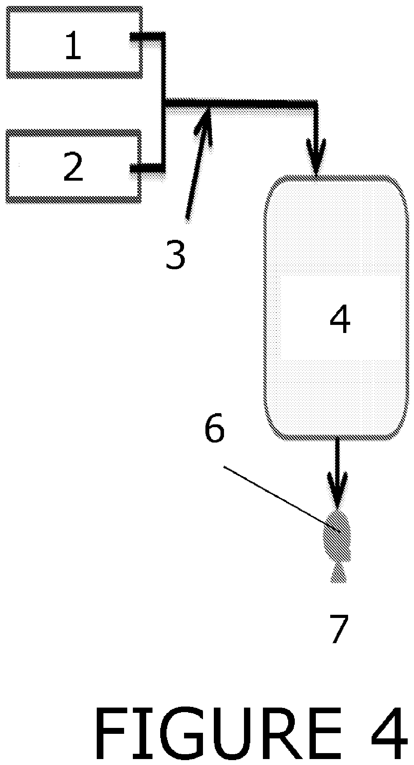

Referring now to FIG. 4 (not according to the invention) there is shown a method in which Feed Items A and B (1, 2) can be mixed prior to entering the tank followed by the addition of the diluent to the conduit before entering the wide space (4). Feed Items A and B (1, 2) may be concentrates or diluted prior to blending. The setup may contain an optional in-line mixer to aid in the blending of the chloramine and the diluent. Also, the setup may include a mixer in the tank to aid in efficient blending of the different solutions.

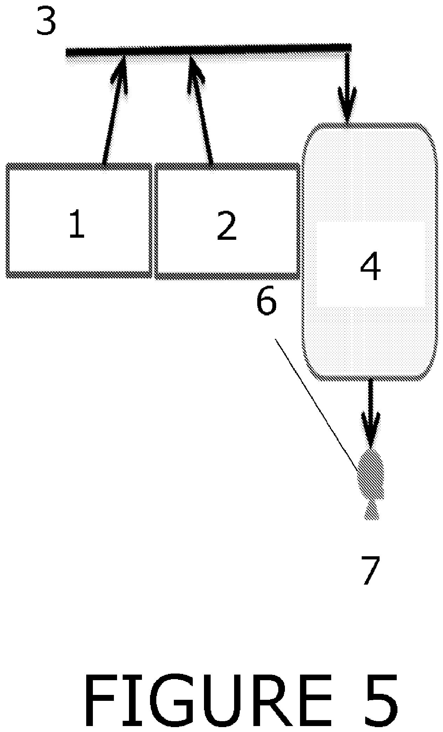

Referring now to FIG. 5 (not according to the invention) there is shown a method in which Feed Items A and B (1, 2) are added sequentially to a stream of the diluent. The combination of Feed Items A and B (1, 2) result in the formation of the chloramine, which is then introduced into the wide space (4) along with the diluent. The setup may contain an optional in-line mixer to aid mixing of the chemical components and the diluent. Also, the setup may include a mixer in the tank to aid in efficient mixing of the different solutions.

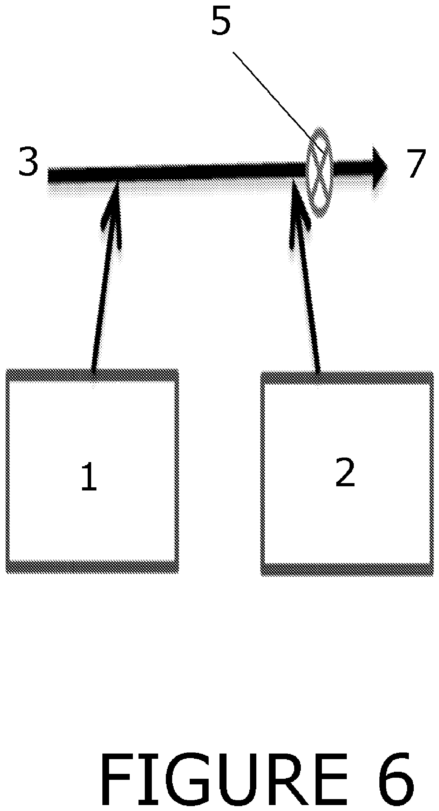

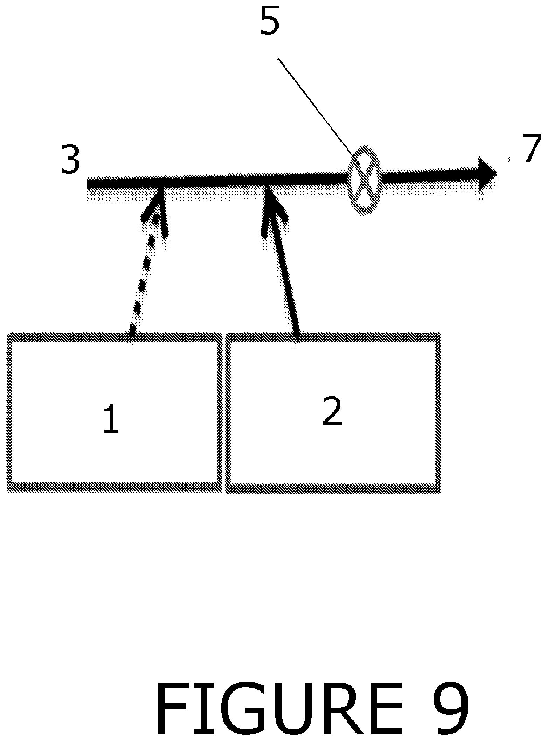

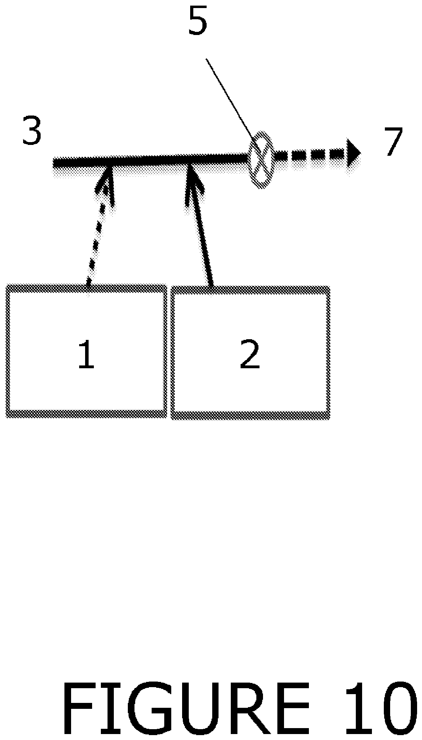

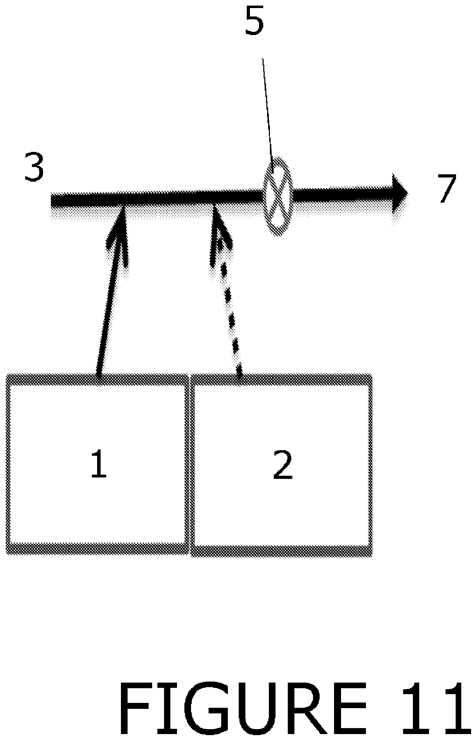

Referring now to FIGs. 6-13 there are shown methods in which Feed Items A and B (1, 2) are synchronously (not according to the invention) or asynchronously (according to the invention) combined in a diluted form (concentrate added to a diluent) via a controller device, such as a PLC device or a timer, or manually and the resulting chloramine is introduced, synchronously or asynchronously, into the process to be treated. In this method, any number of chemical components can be introduced into the diluent stream. The diluent can be water or any other liquid stream appropriate for the dilution of the chemical components. The method may comprise a valve (5) to control the flow. A solid arrow line after the valve (5), depicts a continuous flow while a dashed line represents an interrupted or discontinuous flow.

Referring now to FIG. 6 (according to the invention) there is shown a method in which Feed Items A and B (1, 2) are added sequentially into the conduit in a continuous manner and the feed of the resulting chloramine to the process being treated is continuous.

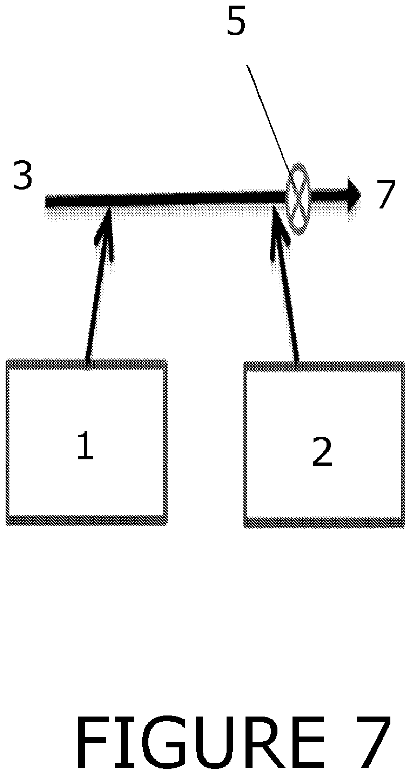

Referring now to FIG. 7 (not according to the invention) there is shown a method in which Feed Items A and B (1, 2) are added sequentially into the conduit in a continuous manner but the feed of the resulting chloramine to the process being treated is discontinuous (not according to the invention).

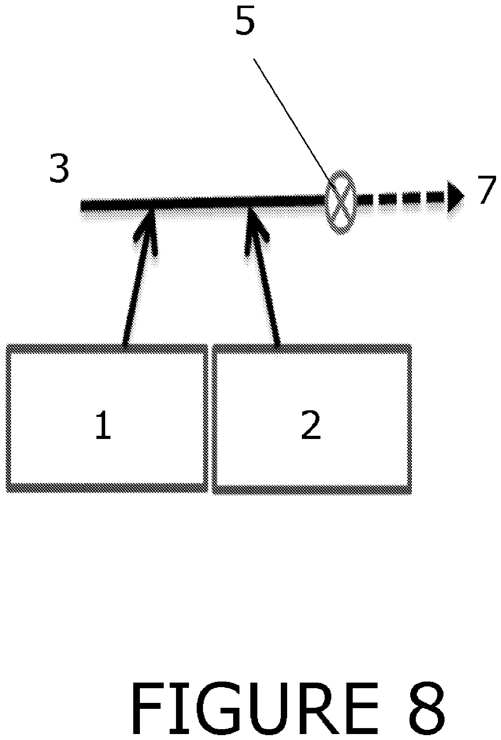

Referring now to FIGs. 8, 9, 10, and 11 (not according to the invention) there are shown a method in which Feed Items A and B (1, 2) are added sequentially into the conduit but the addition of one of Feed Items A or B is periodic. The feed of the resulting chloramine to the process being treated can be either continuous or periodic.

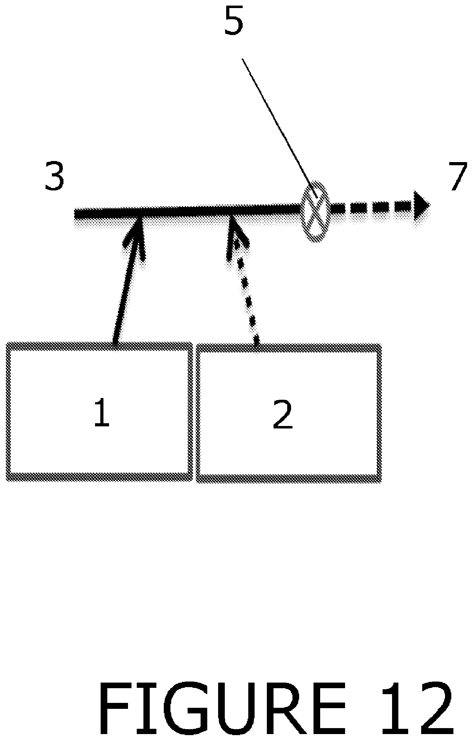

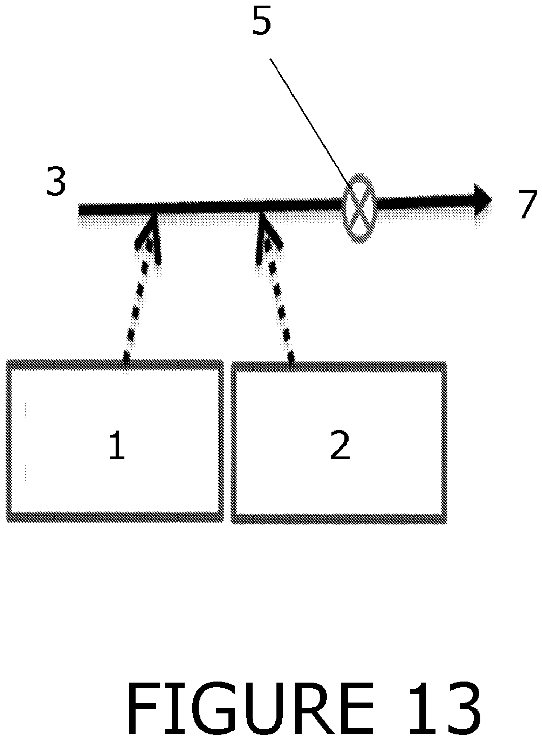

Referring now to FIGs. 12 and 13 there are shown methods in which Feed Items A and B (1, 2) are added sequentially into the conduit but the addition of all the chemical components is periodic. The feed of the resulting chloramine to the process being treated can be either continuous (according to the invention) or periodic (not according to the invention).

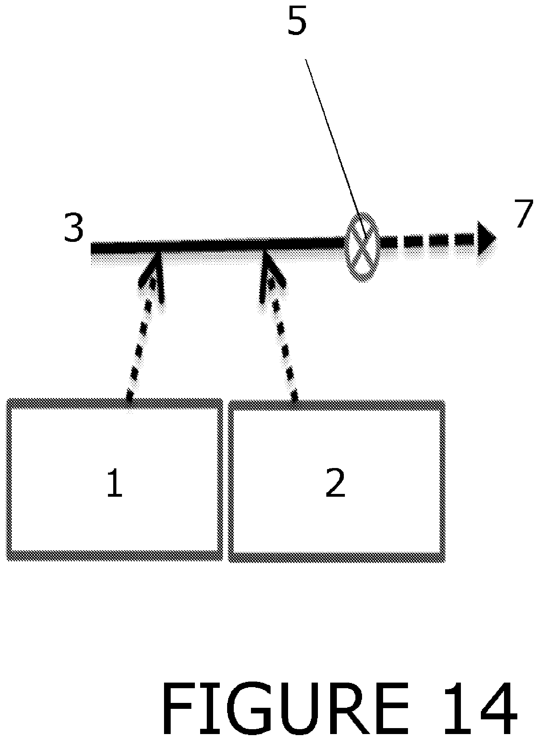

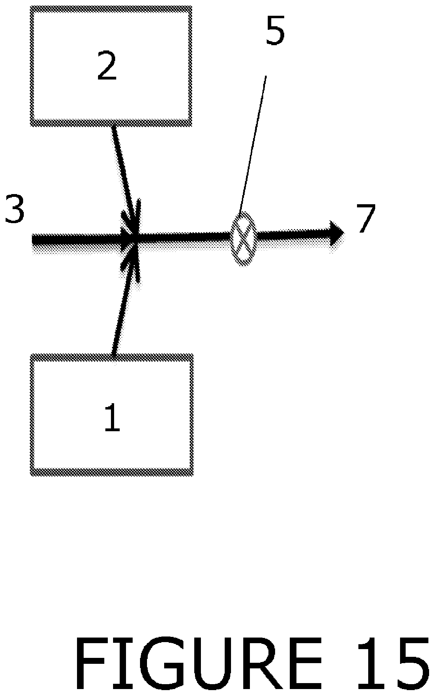

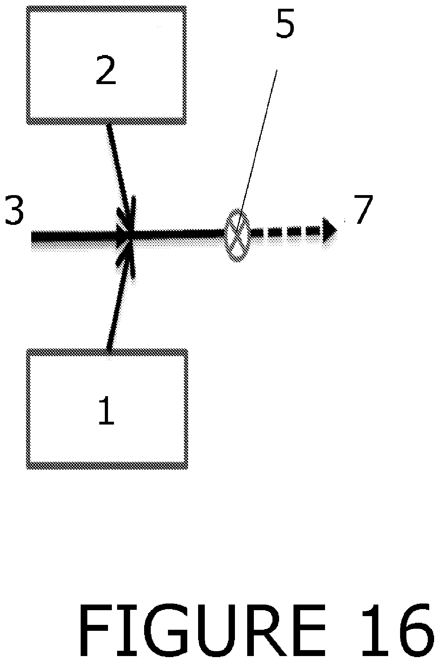

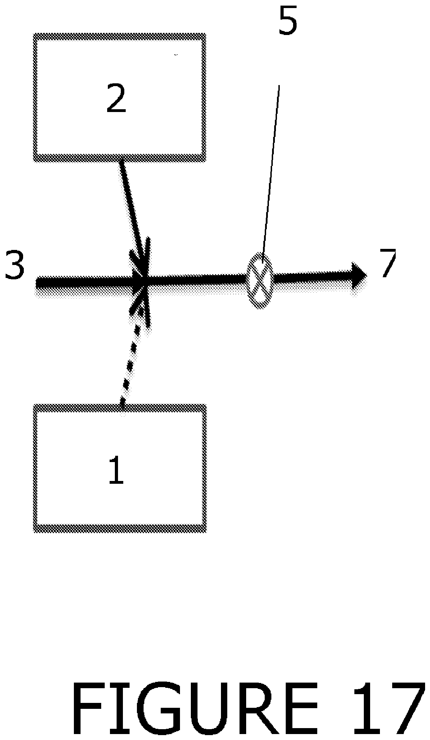

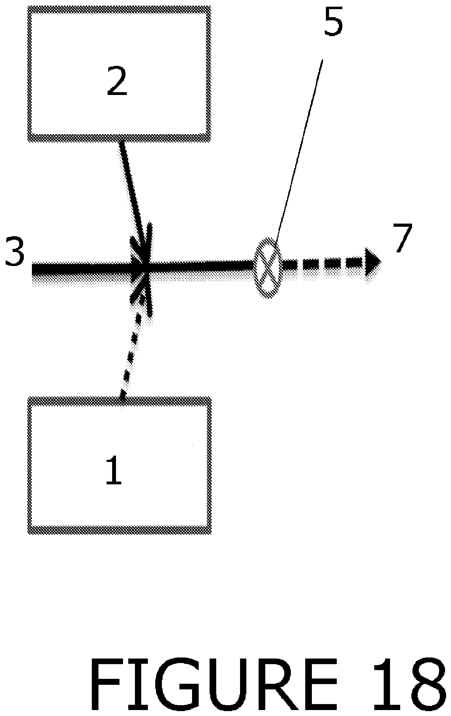

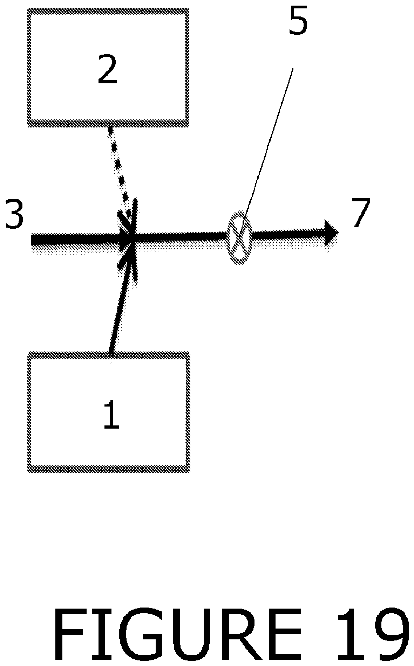

Referring now to FIGs.14, 15, 16, 17, 18, and 19 (not according to the invention) there are shown methods in which Feed Items A and B (1, 2) are added simultaneously at the same location in the conduit and the addition of all the reactants can be continuous or periodic. The feed of the resulting chloramine to the process being treated can be either continuous or periodic.

The inventive methods facilitate the production of chloramine in ways that display numerous advantages. The method facilitates batch production and can be performed under dilute conditions. The ability to fine tune the amounts of chloramine, stabilizer, and halogen components allows for enhanced process compatibility and program performance through optimized chemical use. In at least one embodiment the production is coupled to a monitor device which measures quantity produced, and/or product quality.

As described earlier, the production of a halogenated amine disinfectant (for example chloramine) utilizes an amine source, an oxidizing halogenated compound and a diluent (preferably water) as chemical components. The concentration of the amine source in the concentrate form of the solution can range from 5% - 80% and in the dilute form it can range from 0.01% - 5%. Similarly, the concentration of the oxidizing halogenated composition in the concentrated form can range from 3% - 18% and in the dilute form it can range from 0.01% - 3%. From the perspective of blending ratio between the reactants, the molar ratio can range from 0.1:1 (N:Cl) to 10:1 (N:Cl). The ratio at which blending optimizes the formation of chloramine will determine the flow rates of the reactant in relation to time (invented method #1 above) or in relation to the flow rate of the diluent (invented method #2 above). The need for pH control at the time of blending may be achieved through the addition of other chemical components, for example caustic or an acid, or other means.

Among other reasons, this invention is superior to the prior art because it results in a form of stabilized-chlorine that has enhanced persistence of chlorine in fouled water systems thus providing for improved biofouling control.

The invention also moots the need for continuous operation of the chloramine feed system. Also, since the chloramine is produced in a dilute batch mode, the equipment required for production is simplified and the need for expensive, compatible materials is reduced. This also results in a safer system as there is no danger of a "runaway" reaction in controlled batch production that exits in continuous reactions. The controlled nature of the reaction also allows for precise dose changes in response instant changes in the reaction conditions.

The chloramine can be produced in a batch mode and then be dosed continuously or intermittently into the system being treated. This method also provides the ability to periodically deliver shock doses at much higher concentrations than would normally be applied and then allowing the chlorine residual to decay prior to subsequent treatment. Application of chloramine in such a shock dose regime provides for more persistent and widely distributed chlorine residual. Enhanced persistence of chlorine allows for better control over microbiological populations that may not be adequately controlled at lower chlorine doses or that may tend to develop as 'resistant' populations.

In at least one embodiment the chloramine is added according to an asynchronous mixing process. Unlike for example in US Patents 6,132,628 and 5,976,386 the asynchronous mixing of the reagents is more likely to result in the particular formulation ideal for killing the particular organism present happening to result and it also creates a dynamic environment which makes it difficult for organisms to adapt to. Such a moving target allows for a more thorough biocidal effect.

In at least one embodiment the asynchronous mixing process is a batch process. The reagents are made in discrete batches and are blended and added for a discrete period of time.

According to the invention the asynchronous mixing process is a continuous process. The flow of reagents is not linked to a single blending. At any time there is an alternation of which reagents are fed. At some times all of the reagents are being fed and at other times some or none of the reagents are fed.

In at least one embodiment the flow of reagents is inhibited and does not pass directly from the conduit in which it is mixed into the system to be treated. Instead the reagent flow is stopped for a period of time in a tank or wide space for a period of time where at least some mixing occurs and only then do the reagents continue on to the system being treated.

In at least one embodiment, the chloramine is produced by the blending of an amine and chlorine (or bromine) source in a certain ratio. Chloramines provide for a more persistent chlorine residual in fouled water systems. Therefore, there are times when it would be beneficial to not dose chloramine but to dose only one of the two reactants (amine source or the chlorine compound). The need for such a strategy will vary from one application to another. For example, in conditions where there is the likelihood of low halogen consumption, a periodic addition of the amine source alone (no halogen) will aid quenching the free hypochlorous acid, formed or introduced, and thereby reduce corrosion. Minimizing free halogen also provides for improved compatibility with other chemicals that might be added to water systems, including but not limited to strength aids, retention or drainage aids, sizing chemicals, optical brightening agents, and dyes. Similarly, under conditions of high halogen demand, it would be prudent to periodically administer the oxidizing halogen alone (without amine) so that the halogen reduces some of the chlorine demand and improves the long-term persistence of the chloramine and chlorine residual in the water system.

In at least one embodiment the process water system being treated for microbial control include but are not limited to: cooling water systems, domestic water systems, boiler water systems, biofouling control or cleaning of RO membrane systems, in Food and Beverage applications such as flume water treatment, washing of fruits, salads and vegetables, treatment of waste water systems, ballast water systems, and paper, tissue, towel and board manufacturing processes, including machine chests, head box waters, broke chests, shower water etc.

In at least one embodiment the flow of at least one of the reagents is governed by a feeding mechanism. The feeding mechanism may be in informational communication with one or more forms of diagnostic equipment. The diagnostic equipment may measure and transmit the measurement of such variables as pH, temperature, amount of biological infestation, type of biological infestation, and concentrations of one or more compositions of matter. The measurement may be of any portion of the system to be treated and/or in any portion of the feed line(s). In at least one embodiment at least one of the forms of diagnostic equipment is at least one form of equipment described in US Patent 7,981,679. In at least one embodiment the feeding mechanism is constructed and arranged to increase, decrease, or cease the flow of at least one reagent in response to receiving at least one transmitted measurement.

Not according to the invention the asynchronous flow of reagents is accomplished according to a "slug dose" strategy. In a slug dose the feeding alternates between low or non doses of one or more reagents and then concentrated feedings. For example over a 24 hour period extending between hour 0 and hour 24, at some point between hour zero and hour 6 nothing is fed into the system, then for up to 6 hours bleach or ammonium sulfate is added, then for up to 6 hours both bleach and ammonium sulfate are added. In this regiment the concentration of free bleach free ammonium sulfate chlorine and formed chloramine varies. The slug dose can be targeted to be in synch with the expected growth and persistence of particular forms of biological infestation. In at leats one embodiment multiple slug doses can be fed per 24 hour period interspersed with periods of time in which nothing is fed to the system.

According to the invention the asynchronous flow of reagents is accomplished according to a "continuous dose" strategy. In a continuous dose there is constantly some reagent being fed into the system but what and how much of each reagent changes. For example over a 24 hour period extending between hour 0 and hour 24, at some point between hour zero and hour 6 all of the reagents are fed into the system, then for up to 6 hours only bleach or only ammonium sulfate is added, then for up to 6 hours both bleach and ammonium sulfate are added. In this regiment the concentration of free bleach free ammonium sulfate chlorine and formed chloramine also varies. In addition the continuous dose can also be targeted to be in synch with the expected growth and persistence of particular forms of biological infestation. In at least one embodiment multiple doses of only bleach and/or only ammonium sulfate can be fed per 24 hour period interspersed with periods of time in which both are fed to the system.

## Claims

1. A method of producing stable disinfectant for use as a biocidal composition, the method comprising:
providing reagents, the reagents comprising:
a) an amine source of disinfectant in concentrated form,
b) an oxidizing halogen compound in concentrated form, and
c) a diluent
asynchronously feeding the amine source of disinfectant in concentrated form and oxidizing halogen compound in concentrated form into an area in a mixing line where the diameter of the line is larger than the largest individual reagent supply line leading into it and in which the transition from the smaller to larger diameter is not streamlined, whereby when a liquid flows into this area the change in diameter results in eddies which mix the fed materials in an erratic manner and prevents channeling, and
allowing all three of the reagents to come into contact and mix with each other, wherein the disinfectant is produced according to a continuous dose process.

2. The method of claim 1 wherein the amine source is chloramine.

3. The method of claim 1 wherein the diluent comprises enough caustic to reduce the pH of the combination of reagents to no more than 12.5.

4. The method of claim 1 wherein the concentration of the disinfectant in concentrated form is in the range from 5% - 80% and after it is mixed with the diluent it drops to 0.01% - 5%.

5. The method of claim 1 wherein the concentration of the oxidizing halogen compound in concentrated form is within the range of 3% - 18% and after it is mixed with the diluent it drops to 0.01% - 3%.

6. The method of claim 2 wherein the molar ratio of chloramine to oxidizing halogen is within the range of 0.1:1 to 10:1.

7. The method of claim 1 wherein the oxidizing halogen is a chlorine source.

8. The method of claim 1 wherein the oxidizing halogen is sodium hypochlorite.

## Patentansprüche

1. Verfahren zum Erzeugen eines stabilen Desinfektionsmittel zur Verwendung als biozide Zusammensetzung, wobei das Verfahren Folgendes umfasst:
Bereitstellen von Reagenzien, wobei die Reagenzien Folgendes umfassen:
a) eine Aminquelle des Desinfektionsmittels in konzentrierter Form,
b) eine oxidierende Halogenverbindung in konzentrierter Form, und
c) ein Verdünnungsmittel
asynchrones Zuführen der Aminquelle des Desinfektionsmittels in konzentrierter Form und Oxidieren der Halogenverbindung in konzentrierter Form in einen Bereich in einer Mischleitung, in dem der Durchmesser der Leitung größer als die größte einzelne Reagensversorgungsleitung ist, die in diese führt, und in dem der Übergang von dem kleineren zu dem größeren Durchmesser nicht stromlinienförmig ist, wodurch, wenn eine Flüssigkeit in diesen Bereich fließt, die Änderung des Durchmessers zu Wirbeln führt, die die zugeführten Materialien auf unregelmäßige Weise mischen und eine Kanalbildung verhindern, und Ermöglichen, dass alle drei Reagenzien in Berührung gebracht werden und miteinander gemischt werden, wobei das Desinfektionsmittel nach einem fortlaufenden Dosisvorgang erzeugt wird.

2. Verfahren nach Anspruch 1, wobei die Aminquelle ein Chloramin ist.

3. Verfahren nach Anspruch 1, wobei das Verdünnungsmittel ausreichend Ätzmittel umfasst, um den pH-Wert der Kombination von Reagenzien auf nicht mehr als 12,5 zu senken.

4. Verfahren nach Anspruch 1, wobei die Konzentration des Desinfektionsmittels in konzentrierter Form in einem Bereich von 5 % - 80 % liegt, und, nachdem es mit dem Verdünnungsmittel gemischt wird, auf 0,01 % - 5 % fällt.

5. Verfahren nach Anspruch 1, wobei die Konzentration der oxidierenden Halogenverbindung in konzentrierter Form innerhalb des Bereichs von 3 % - 18 % liegt, und, nachdem es mit dem Verdünnungsmittel gemischt wird, auf 0,01 % - 3 % fällt.

6. Verfahren nach Anspruch 2, wobei das Molverhältnis von Chloramin zu oxidierendem Halogen innerhalb des Bereichs von 0,1:1 bis 10:1 liegt.

7. Verfahren nach Anspruch 1, wobei das oxidierende Halogen eine Chlorquelle ist.

8. Verfahren nach Anspruch 1, wobei das oxidierende Halogen Natriumhypochlorit ist.

## Revendications

1. Procédé de production d'un désinfectant stable destiné à être utilisé en tant que composition biocide, le procédé comprenant :
la fourniture de réactifs, les réactifs comprenant :
a) une source d'amine de désinfectant sous forme concentrée,
b) un composé halogène oxydant sous forme concentrée, et
c) un diluant
introduisant de manière asynchrone la source d'amine de désinfectant sous forme concentrée et le composé halogène oxydant sous forme concentrée dans une zone d'une ligne de mélange où le diamètre de la ligne est plus grand que la plus grande ligne d'alimentation en réactif individuelle menant à celui-ci et dans laquelle la transition du plus petit au plus grand diamètre n'est pas fuselée, de sorte que lorsqu'un liquide s'écoule dans cette zone, le changement de diamètre entraîne des tourbillons qui mélangent les matières introduites de manière erratique et empêchent la canalisation, et
permettant aux trois réactifs d'entrer en contact et de se mélanger l'un avec l'autre, le désinfectant étant produit selon un processus de dosage continu,

2. Procédé selon la revendication 1, dans lequel la source d'amine est la chloramine.

3. Procédé selon la revendication 1, dans lequel le diluant comprend suffisamment de caustique pour réduire le pH de la combinaison de réactifs à pas plus de 12,5.

4. Procédé selon la revendication 1, dans lequel la concentration du désinfectant sous forme concentrée se situe dans la plage de 5 % à 80 %, tombant à 0,01 % à 5 % après son mélange avec le diluant.

5. Procédé selon la revendication 1, dans lequel la concentration du composé halogène oxydant sous forme concentrée se situe dans la plage de 3 % à 18 %, tombant à 0,01 % à 3 % après son mélange avec le diluant.

6. Procédé selon la revendication 2, dans lequel le rapport molaire de la chloramine à l'halogène oxydant se situe dans la plage de 0,1:1 à 10:1.

7. Procédé selon la revendication 1 dans lequel l'halogène oxydant est une source de chlore.

8. Procédé selon la revendication 1, dans lequel l'halogène oxydant est l'hypochlorite de sodium.
